Europäisches Patentamt

European Patent Office

Office européen des brevets

(19)

(11) Numéro de publication: **0 220 293**
**B1**

## FASCICULE DE BREVET EUROPEEN

(12)

(45) Date de publication du fascicule du brevet:
08.02.89

(51) Int. Cl.⁴: **B 01 D 15/08**, B 01 J 20/32,
C 12 N 11/14

(21) Numéro de dépôt: 86903188.0

(22) Date de dépôt: 04.06.86

(86) Numéro de dépôt international:
PCT/CH 86/00081

(87) Numéro de publication internationale:
WO 86/07281 (18.12.86 Gazette 86/27)

(54) PROCEDE DE PURIFICATION DE SUBSTANCES BIOACTIVES PAR ADSORPTION BIOSPECIFIQUE.

(30) Priorité: 10.06.85 CH 2436/85

(43) Date de publication de la demande:
06.05.87 Bulletin 87/19

(45) Mention de la délivrance du brevet:
08.02.89 Bulletin 89/6

(84) Etats contractants désignés:
AT BE CH DE FR GB IT LI NL SE

(56) Documents cités:
FR-A- 2 020 527
FR-A- 2 078 427
FR-A- 2 083 067
US-A- 3 652 761
US-A- 4 190 425

(73) Titulaire: BATTELLE MEMORIAL INSTITUTE, 7 route de
Drize, CH-1227 Carouge/Genève (CH)

(72) Inventeur: SCHNEIDER, Michel, Domaine du
Moulin 34, route d'Annecy, CH-1256 Troinex (CH)
Inventeur: GUILLOT, Christian, Les Eplanes, Le Chable
Beaumont, F-74160 Saint Julien en Genevois (FR)
Inventeur: LAMY, Bernard, Chemin Jules Vuy, 23,
CH-1227 Carouge (CH)

(74) Mandataire: Dousse, Blasco et al, 7, route de Drize,
CH-1227 Carouge/Genève (CH)

ACTORUM AG

## Description

La présente invention concerne en général la purification de substances bioactives par adsorption biospécifique. Plus précisément la présente invention a pour objet (a) un procédé pour séparer, par adsorption sur un substrat minéral en phase aqueuse, une substance bioactive susceptible de se fixer, par formation d'un complexe réversible stable et spécifique, sur un ligand donné, suivant lequel on utilise comme milieu support adbsorbant un matériau minéral finement divisé modifié par des substituants siloxanes porteurs desdits ligands et (b) un procédé de préparation de ce substrat adsorbant.

On sait que pour la purification de substances biologiques (protéines, enzymes, héparine, hormones, lectines, antigènes, anticorps et autres polypeptides) par chromatographie d'affinité, on sélectionne un matériau support pour chromatographie sur lequel on greffe des molécules chimiques (ligands) présentant une affinité forte et spécifique pour ladite substance à purifier. Lorsque celle-ci, en mélange avec d'autres substances d'avec lesquelles on désire la séparer, est mise en présence de ce matériau particulaire, elle se lie au ligand en question par une réaction spécifique (généralement réversible ultérieurement), par exemple de complexation comme dans les réactions antigène-anticorps, alors que les autres substances restent en solution. Ultérieurement, on relargue la substance à purifier en plaçant le matériau support dans des conditions et dans un milieu tels que le complexe se dissocie et d'où on peut récupérer, d'une part, la substance désirée et, d'autre part, le support chromatographique susceptible d'être recyclé dans une nouvelle extraction (voir par exemple le document US-A-4,066,505). Une telle opération de relargage se fait généralement dans une colonne de chromatographie au moyen d'un solvant ou mélange de solvants d'élution.

Parmi les matériaux supports généralement utilisés dans le but susmentionné, on peut citer les gels organiques et minéraux tels que ceux identifiés par les noms commerciaux de Sephadex, Sepharose, Sephacryl, Spherosil, Ultrogel, Affi-Gel, etc.

En général ces matériaux sont constitués de particules poreuses de forme sphéroïdale ou autre dont les dimensions sont de l'ordre de quelques microns à plusieurs centaines de microns et dont les pores sont de l'ordre de 10 à 300 nm.

Comme agents de liaison permettant de lier un ligand déterminé à la surface du support de chromatographie, on fait intervenir des molécules comportant, d'une part, une fonction capable de réagir de manière covalente (ou autre) avec ledit ligand et, d'autre part, une fonction permettant audit ligand de se fixer (chimiquement ou par adsorption) à la surface du support. En ce qui concerne les supports minéraux tels que les particules de silice (Spherosil) ou les verres poreux (CPG glass), on utilise communément des silanes réactifs tels que des trialcoxy-alcoyl silanes où le groupe alcoyle comporte des fonctions réactives vis-à-vis des ligands à fixer telles que $-OH$, $-CHO$, $-NH_2-NCO$, oxiranne, etc.

Ainsi K. Roy et al., «Affinity Chromatography and Biological Recognition», Editeur I. M. Chaiken et al., Academic Press 1983, p. 257, décrivent l'utilisation d'un support de gel de silice silanisé par le γ-glycidyl-oxypropyl-triméthoxy-silane. P. O. Larsson et al., dans «Some New Techniques Related to Affinity Chromatography», les Colloques de l'INSERM: Chromatographie d'affinité et interactions moléculaires, Editeur J.M. Egli (1979), p. 91, décrivent la silanisation d'un gel de silice (particules de 10 μm, pores de 6 nm) par le glycéropropyl trialcoxy silane (le substituant alcoyle est un groupe $HOCH_2-CH_2OH--CH_2O-C_3H_6-$), la fonction glycol étant ensuite convertie en fonction aldéhydique par des techniques connues, celle-ci servant ultérieurement à fixer un ligand bioactif (par exemple un anticorps) par une réaction de SCHIFF avec un groupe amino de ce dernier et réduction de la liaison $N=C$.

Le document US-A-3,652,761 décrit le couplage de molécules bioactives (telles qu'antigènes ou anticorps) sur des supports minéraux tels que verre, gel de silice, silice colloïdale, bentonite, wollastonite, etc., par l'intermédiaire d'alcoxysilanes alcoylés dont le groupe alcoyle comporte des fonctions telles qu'amino, nitroso, carbonyle, carboxy, isocyanato, diazo, isothiocyanato, sulfhydryle et halogénocarbonyle.

Le document WO-A-82/02818 décrit un procédé et un dispositif pour séparer les immunoglobulines du lait en faisant passer celui-ci sur une colonne remplie d'un lit de particules, notamment de verre poreux silanisé par les moyens habituels évoqués plus haut, et porteuses d'anticorps monoclonaux spécifiques de l'une ou l'autre des immunoglobulines à purifier.

D'autres documents tels que EP-A-56977 et EP-A-88818 traitent de sujets similaires.

Les procédés connus à ce jour qui font appel aux techniques susmentionnées présentent certains inconvénients liés à la nature poreuse des supports utilisés, à la dimension de ces pores et au fait que les particules de ces supports doivent présenter une forme quasi sphérique et des dimensions uniformes pour éviter les phénomènes de renardage (chanelling) lorsqu'elles sont placées en colonnes. Par ailleurs, comme la plus grande partie de la surface active de ces matériaux se trouve à l'intérieur des pores et que ceux-ci présentent des dimensions souvent du même ordre de grandeur que les molécules à fixer, celles-ci diffusent lentement à l'intérieur de ces pores et, lors de leur relargage, elles diffusent difficilement vers l'extérieur. De plus, ces substances à purifier, le plus souvent des macromolécules, ne présentent en elles-mêmes que des vitesses de diffusion faibles. Comme la distance moyenne que doivent parcourir ces macromolécules pour atteindre le ligand considéré est relativement importante dans le cas de particules adsorbantes de quelques dizaines de microns, il est évident que le processus, aussi bien d'adsorption que de désorption des substances à purifier, sont lents et peu efficaces. Les pores de faible dimension ne seront pas accessibles à de grosses molécules et les ligands présents dans ces pores seront donc incapables de fixer la substance à purifier.

Les raisons indiquées ci-dessus expliquent que l'utilisation d'adsorbants biospécifiques poreux présente de nombreux inconvénients, les plus importants étant leur faible capacité de fixation et la lenteur des étapes d'adsorption et de désorption. En ce qui concerne la capacité de fixation, par exemple dans le document US-A-3,652,761 on indique qu'avec un taux de greffage de 14 à 18 mg d'antigène (ligand) par gramme de verre poreux, on ne fixe qu'environ 5 mg d'anticorps (γ-globuline humaine) par g de support. Il faut aussi indiquer que le coût des perles de matériaux poreux et de dimensions uniformes est très élevé et peu compatible avec une utilisation industrielle à grande échelle.

Le procédé de l'invention, tel que défini à la revendication 1, remédie aux inconvénients susmentionnés et permet d'élever sensiblement le rendement spécifique des extractions. De plus, la vitesse de fixation des produits à extraire sur le substrat est élevée, ce qui rend le procédé plus économique d'emploi. Finalement, le présent procédé s'applique sans problème au traitement de relativement grandes quantités de substances à extraire, de l'ordre de plusieurs dizaines à centaines de tonnes par an, ce qui n'est pas le cas des techniques antérieures. On ajoutera que le prix de la silice submicronisée non poreuse est inférieur à celui des supports à pores contrôlés, généralement utilisés pour la purification par adsorption d'un ordre de grandeur de $10^3$. Par ailleurs, contrairement à ce qu'on aurait pu attendre, les particules submicroniques non poreuses utilisées dans l'invention se séparent facilement par filtration après avoir été greffées par un ligand.

Parmi les supports minéraux qu'on préfère utiliser dans la présente invention, on cite la silice précipitée ou pyrogénique dont les particules primaires (non agglomérées) ont une taille d'environ 0,01 à 0,1 µm suivant les catégories et de grande surface spécifique. En ce qui concerne $Al_2O_3$, $TiO_2$ et $ZrO_2$, on utilise des poudres dont les particules sont généralement comprises entre 0,02 et 1 µm. Dans ce qui suit, on se référera plus particulièrement à la silice, étant entendu que l'information donnée s'applique aussi bien à l'alumine qu'à $TiO_2$ et à $ZrO_2$. On peut également utiliser les supports silicatés décrits dans le document US-A-3,652,761. En ce qui concerne lesdits supports, on notera l'existence des documents suivants:

Le document US-A-4,190,425 décrit des matériaux polymères à base de silice submicronique pour le remplissage de colonnes pour la chromatographie en phase gazeuse. Ainsi, les exemples 4 et suivants enseignent une technique de greffage de radicaux organiques sur les particules de silice et leur copolymérisation ultérieure avec des monomères de manière à fournir un milieu hautement poreux (voir Abstract, ligne 16). Un tel matériau ne conviendrait donc pas aux utilisations recherchées dans la présente invention. Par ailleurs, ce document enseigne la silylation à des fins de désactivation (par l'hexaméthyldisilazane) du support chromatographique, et non pas la silanation des particules de silice pour les besoins du greffage comme dans l'invention.

Le document FR-A-2.020.527 décrit l'immobilisation de molécules bioactives (des enzymes, par exemple) sur des supports minéraux par l'intermédiaire, comme agents de couplage, de silanes. Comme supports minéraux, on cite le verre poreux, le gel de silice, la bentonite, l'alumine, l'hydroxyapatite et la silice colloïdale. A ce sujet, on relèvera que le but poursuivi dans le document FR-A-2.020.527, la préparation de supports minéraux bioactifs recyclables, diffère de celui de la présente invention. En effet, les enzymes immobilisés sont des catalyseurs et non des adsorbants biospécifiques dont le mode d'action est totalement différent. Par ailleurs, le greffage des silanes décrit dans la référence s'effectue en milieu anhydre (xylène, benzène) et non aqueux comme dans l'invention.

Le document FR-A-2.083.067 concerne également des enzymes insolubilisés, notamment des matières siliceuses portant une enzyme réutilisable fixée par l'intermédiaire d'un polymère et d'un organosilane (voir p. 4, lignes 9-17). En raison de l'existence du polymère intermédiaire, l'enseignement de ce document s'éloigne encore de celui de l'invention.

Le document FR-A-2.078.427 traite également d'un sujet analogue. Par exemple, l'exemple 1 de ce document décrit la fixation de la trypsine sur de la silice de type Cab-O-Sil (ce nom est utilisé pour désigner de la silice submicronique) par l'intermédiaire d'un silane et d'une carbodiimide. Cet enseignement est donc très voisin de celui du document FR-A-2.020.527. On remarquera, à titre comparatif, que pour la réalisation d'un tel catalyseur réutilisable, la trypsine doit être fortement liée au support minéral, ce qui n'est nullement le cas dans la présente invention. En effet, suivant celle-ci, on recherche la création d'une liaison temporaire réversible telle que celle qui résulte de l'adsorption sélective de la trypsine par un ligand tel que la phénylbutylamine (celle-ci étant fixée sur les particules minérales non poreuses), cette adsorption étant réversible et permettant ensuite de relarguer ladite trypsine.

Pour effectuer l'étape a) du présent procédé dans le cas de la silice, on ajoute une suspension aqueuse du support «silice-ligand» à un milieu aqueux contenant la substance bioactive à isoler, cette mise en contact des partenaires étant réalisée dans des conditions optimales et facilement ajustables de pH, force ionique et température, ce qui favorise fortement le rendement de l'extraction. Ces conditions sont à choisir de cas en cas par le praticien suivant les règles du métier. Les rendements d'adsorption et de fixation de la substance recherchée sont excellents. De plus, la réaction est très rapide car le présent support est exempt des pores dans lesquels les molécules à purifier (généralement des molécules encombrantes) devraient normalement pénétrer, comme c'est le cas avec les supports habituels, et tous les groupements réactifs sont disponibles sur la surface extérieure des particules. En conséquence, des temps de fixation pratiquement complète de l'ordre de 5 à 10 min à température ambiante sont courants. Par ailleurs, on peut travailler à pression ambiante ce qui, au point de vue économique, est plus favorable qu'avec les supports poreux qui nécessitent l'application d'une pression (plus ou moins élevée suivant les cas).

En général, lorsqu'on utilise les suspensions de silice submicronique de l'invention, la densité de la suspension adsorbante hydratée est de l'ordre de 0,2 (5 ml de suspension adsorbante par g de $SiO_2$) et celle-ci possède une capacité d'adsorption biospécifique de l'ordre de 100 à 300 mg de substances bioactives par g de silice. De telles valeurs correspondent à une capacité d'adsorption par g de silice d'au moins un ordre de grandeur supérieur à celle des supports poreux habituels.

Pour effectuer l'étape b) du présent procédé, on peut procéder par filtration par les moyens habituels ou par centrifugation. Pour la centrifugation, des champs de gravitation centrifuge de l'ordre de 4000 à 6000 g conviennent et peuvent être obtenus sans difficulté avec des centrifugeuses de grande capacité, c'est-à-dire capables de traiter de 1 à plusieurs litres de suspension par opération.

On peut également appliquer, pour cette séparation, le procédé connu de filtration tangentielle au moyen d'une membrane d'ultrafiltration ou de microfiltration de porosité déterminée. Suivant cette technique, on met la suspension à filtrer en contact avec la surface de la membrane et on la fait circuler rapidement tangentiellement à celle-ci. La perméabilité de cette membrane est choisie de manière qu'un flux important de la phase liquide passe dans le perméat tandis que les particules elles-mêmes ne peuvent traverser la membrane, ce qui conduit à leur séparation progressive d'avec la phase liquide contenant les substances non adsorbées. Certains dispositifs commerciaux de filtration tangentielle mettent en œuvre des fibres creuses à l'intérieur desquelles circule la suspension (par exemple Module Microdyn de ENKA GmbH, Wuppertal, RFA; Module CARBOSEP de SFEC, Bollène, FR); d'autres dispositifs font appel à des membranes planes (Cassettes Pellikon de MILLIPORE). On peut également utiliser, pour effectuer la séparation des particules chargées d'avec les substances dissoutes à éliminer, la technique de diafiltration suivant laquelle on rajoute continuellement à la suspension soumise à la filtration une quantité de phase aqueuse identique à celle éliminée dans le perméat, ce processus étant poursuivi jusqu'à ce que ladite phase aqueuse ne contienne plus que le substrat particulaire porteur de la substance extraite, à l'exclusion des autres produits dissous présents à l'origine dans la solution à purifier.

Dans de telles séparations, il n'est nullement indispensable de procéder à un séchage de la silice chargée ainsi lavée et de l'isoler du milieu de lavage car celui-ci convient en général, pour la mise en œuvre de la suite des opérations, c'est-à-dire l'étape (c).

En ce qui concerne la désorption effectuée à l'étape (c) de la substance à purifier d'avec le support, c'est-à-dire la dissociation du complexe «ligand/substance à purifier», on procède par les moyens habituels, c'est-à-dire en ajustant les caractéristiques de la phase aqueuse (pH, température, force ionique, dilution par un solvant organique approprié, etc.) de manière convenable pour qu'une telle opération se réalise. On trouvera des exemples de conditions opératoires pour une telle désorption dans la référence suivante: E. A. Hill et M. D. Hirtenstein, Adv. in Biotechn. Process 1, 31 (1983). Parmi les techniques les plus utilisées, on peut citer celles relatives à la modification de la force ionique, du pH, l'utilisation d'agents chaotropiques (KSCN, par exemple), de solvants organiques hydrosolubles (alcools, éthylène glycol, isopropanol, etc.), d'agents «déformants» (urée, guanidine) et de ligands à l'état libre. Dans certains cas, on a utilisé avantageusement une phase aqueuse 0,5 M NaCl contenant environ 20% d'isopropanol ou un autre solvant hydrosoluble comparable pour effectuer une telle dissociation.

L'étape (d) peut être effectuée suivant des techniques similaires à celles, décrites plus haut, concernant l'étape (b). En effet, on peut, pour séparer le substrat silice-ligand d'où la substance à purifier a été détachée, utiliser également les techniques de centrifugation et de filtration susmentionnées, la filtration tangentielle étant incluse. Dans ce cas, bien entendu, c'est le filtrat qui constitue la phase la plus particulièrement recherchée puisqu'il contient, en solution, la substance qu'on désire obtenir à l'état pur. Pour en extraire ladite substance, on procède comme d'habitude, c'est-à-dire qu'on en évapore l'eau par distillation, par exemple à pression ordinaire ou sous pression réduite au rotavapor, ou encore par lyophilisation ou pulvérisation, jusqu'à séparation ou précipitation. On peut également provoquer cette précipitation par addition d'un non-solvant ou par salification (addition, par exemple, de $(NH_4)_2SO_4$). On recueille alors la substance et on la stocke suivant les moyens habituels. Le système silice-ligand ainsi récupéré est normalement réutilisable sans autre pour une nouvelle opération d'extraction.

Pour préparer le support de silice utilisé dans le procédé de l'invention (système silice-ligand), on peut procéder, soit à la silanisation de la silice submicronique au moyen d'un alcoxysilane sur lequel on a déjà, au préalable, fixé un ligand approprié, soit à une silanisation de cette silice par un alcoxysilane porteur d'un groupe susceptible de fixer ce ligand, ce dernier étant apporté après coup.

Dans le premier cas, on disperse de la silice submicronique, par exemple de la silice pyrogénique ou précipitée ayant une surface spécifique de l'ordre de 50 à 600 m²/g (les type AEROSIL-130, -200, -300 et -380 de DEGUSSA conviennent bien, ainsi que les variétés CAB-O-SIL de CABOT Corp. USA) par violente agitation dans un liquide, par exemple un solvant organique ou de l'eau, de préférence en présence de billes de verre, jusqu'à obtention d'un liquide d'apparence laiteuse et homogène. La présence des billes dans le mélange en agitation a pour effet de réduire la dimension des agglomérats de particules de $SiO_2$ qui ont tendance à se former (adhésion des particules entre elles en raison de leur forte hygroscopicité) dans de telles conditions. On peut aussi effectuer la dispersion à l'aide d'un homogénéiseur, par exemple l'appareil POLYTRON de KINEMATICA GmbH, RFA. En ce qui concerne l'alumine, les produits dénommés «Aluminium oxide-C» de DEGUSSA et ALCAN de CABOT sont utilisables. Pour $ZrO_2$ et $TiO_2$, on utilise des poudres très fines dont la surface spécifique est d'au moins 50 m²/g (par exemple Titanium dioxide P 25 de DEGUSSA). Après un certain temps de dispersion (½ h à 1 h) à température ambiante dans un dispositif approprié, la taille des agglomérats se normalise vers 100 à 1000 nm, de préférence 200-300 nm (on notera que les particules individuelles primaires de telles silices n'ont, elles-mêmes au départ, que quelques nanomètres). On peut vérifier la dimension des agglomérats après dispersion suivant les moyens habituels, par exemple au moyen d'un appareil COULTER Nanosizer.

Par ailleurs, on sélectionne un silane approprié et on le fait réagir avec le ligand requis pour la formation ultérieure du complexe spécifique avec la substance à purifier, des inhibiteurs d'enzymes, des cofacteurs, des lectines, des colorants tels que le Cibachron bleu F3G-A ou les colorants PRO-CION (ICI), des groupements hydrophobes tels que des radicaux alcoyle, phényle, des hydrates de carbone, de l'héparine, etc.

Les silanes utilisables dans ce procédé sont à choisir parmi ceux dont la fonction réactive, qui fait partie du substituant alcoyle lié à l'atome de silicium, convient pour la fixation du ligand choisi. On a vu plus haut les différents types de trialcoxy-silanes qui peuvent convenir, suivant les cas, et qu'on choisit en fonction de la structure des ligands qu'on cherche à leur adjoindre et de la nature des groupes réactifs de ceux-ci. En général, les ligands polypeptidiques se fixent par leurs groupes réactifs $-OH$, $-NH_2$, SH ou $-COOH$ (modifiés ou non par l'entremise de réactifs intermédiaires éventuels) et les silanes appropriés contiennent des groupes fixateurs $-NCO$, azo, glycidoxy, $-CHO$, oxiranne, amino-, etc. Dans certains cas, il faut prévoir d'utiliser, entre la fonction réactive du silane et le ligand à fixer, un agent de pontage; c'est le cas notamment de la liaison entre un groupement $NH_2$ et un acide carboxylique (utilisation d'un carbodiimide) ou dans celui du couplage entre deux fonctions amino où on peut utiliser, comme agent de pontage, un dialdéhyde, par exemple le glutaraldéhyde. On préfère, dans la présente invention, utiliser le triméthoxyaminopropyl-silane et le triméthoxyglycidoxypropyl-silane. Bien entendu, d'autres alcoxy-silanes semblables, par exemple les éthoxy, propoxy et butoxy-silanes correspondants conviennent aussi. Pour effectuer la réaction entre le silane et le ligand, on procède suivant les moyens et conditions habituels correspondant à la réaction envisagée. Ces conditions étant connues de l'homme de métier, il n'y a pas lieu de les détailler plus avant ici. On notera cependant qu'on opère généralement en un milieu non aqueux tels que THF, acétone, dioxanne et autres solvants organiques anhydres (mais hydrosolubles) dans lesquels les groupements siloxanes sont stables. On peut également opérer dans certains cas sans solvant.

Lorsque la fixation du ligand sur le dérivé silane est achevée, on ajoute à température ambiante le mélange réactionnel à la suspension aqueuse ou organique de silice décrite plus haut sous agitation. On peut également opérer à une température plus élevée, par exemple en chauffant entre 20 et 80° C pendant quelques heures (de 1 à 8 h en général). Après refroidissement, on se trouve en possession de la suspension désirée du substrat «silice-ligand» qu'on peut employer tel quel dans le procédé de l'invention (voir la revendication 1).

Dans un second cas de préparation du système silice-ligand, on commence par mettre en contact le trialcoxysilane et la suspension de silice, de préférence une solution aqueuse, l'adjonction du ligand n'intervenant qu'ultérieurement; une telle voie est à choisir notamment lorsque le ligand est insoluble dans les solvants organiques ou sensible à la présence de ceux-ci (dénaturation); c'est le cas de la bacitracine par exemple ou encore celui d'un anticorps ou d'une lectine. Dans ce cas, on peut, soit ajouter directement le réactif de silanisation à la suspension aqueuse de la silice, soit disperser, au préalable, ce réactif silane dans de l'eau à pH 4-10, afin de provoquer une hydrolyse préliminaire des groupes alcoxy de celui-ci et, ensuite, ajouter cette suspension d'alcoxysilane préhydrolysé à la suspension de silice. A ce sujet, on notera que la durée de la période pendant laquelle le trialcoxysilane est maintenu en milieu aqueux avant addition au support minéral influe sur les propriétés de la silice silanisée vis-à-vis de la fixation ultérieure du ligand choisi. Il y a donc là possibilité, en réglant les conditions expérimentales (temps d'attente avant d'ajouter le support à greffer, pH pendant le greffage et température), d'adapter les propriétés du support silanisé en fonction de la nature des ligands qu'on désire utiliser, ce qui constitue un avantage additionnel du présent procédé. En effet, le pH du milieu aqueux dans lequel s'effectue la silanisation, ainsi que la température, présentent aussi une grande importance. Ainsi, plus le pH est élevé (dans la gamme considérée), plus la solution aqueuse a tendance à s'épaissir et le volume du support (lorsqu'on le sépare du liquide par centrifugation) à augmenter. En ce qui concerne la température, on notera que des valeurs de l'ordre de 100° conviennent pour les aminosilanes alors que pour le composé glycidoxy-, il est préférable de ne pas dépasser 50° C.

En ce qui concerne ladite fixation du ligand sur le support silanisé, celle-ci s'effectue en solution aqueuse dans les conditions habituelles, généralement en ajoutant simplement le ligand (en solution aqueuse) à la suspension de silice silanisée réalisée comme décrit ci-dessus et en laissant les réactifs en présence le temps voulu pour que le ligand se lie avec le support. On rappellera que, dans certains cas (voir plus haut), on prévoit à ce stade l'utilisation de réactifs de pontage (voir exemple 5). On utilise ensuite le système «silice-ligand» ainsi obtenu dans le procédé d'extraction comme décrit auparavant. On notera cependant qu'on peut aussi, dans certains cas, effectuer la fixation du ligand sur le support silanisé en milieu organique non aqueux; dans un tel cas, on ajoute un solvant organique hydrosoluble à la dispersion de support silanisé, on centrifuge, reprend le culot dans ledit solvant et répète l'opération jusqu'à élimination de l'eau résiduelle, ce qui fournit, en définitive, une suspension des particules silanisées dans ledit solvant organique. Comme solvant, on peut citer le THF, le dioxanne et l'éthanol. La fixation du ligand, elle-même, s'effectue comme dans le cas susmentionné de fixation directe sur le silane.

Les exemples qui suivent illustrent l'invention.

*Exemple 1:*

On a ajouté goutte à goutte à température ordinaire sous agitation 23 ml (0,1 mole) de glycidoxypropyl-triméthoxysilane dans 77 ml d'une solution 10 mM d'acétate de sodium à pH 4. Après addition, on a laissé le mélange sous agitation 30 min à température ambiante.

Par ailleurs, on a dispersé 6 g de silice pyrogénique (Aerosil 130, DEGUSSA) dans 60 ml d'eau par agitation en présence de billes de verre (diamètre 3 mm) jusqu'à obtention d'une suspension laiteuse dont les particules avaient, en moyenne, 200-300 nm.

On a ensuite ajouté avec agitation 6 ml de la solution de silane à la suspension de silice (1 mmole de silane/g de silice) et on a remonté le pH à 8,5 au moyen d'une solution 0,5 M de $K_2HPO_4$ ($\sim$ 1 ml) et quelques gouttes d'une solution 1N de NaOH. Après une nuit de repos, on a centrifugé la suspension (10 min sous 6000 g) et le culot a été repris et rincé deux fois dans 100 ml d'eau pure.

On a remis la silice silanisée en suspension dans 50 ml d'eau et à une quantité de celle-ci correspondant à 5 g de silice de départ, on a ajouté sous agitation une solution de 25 g de bacitracine dans environ 100 ml de tampon bicarbonate 0,2 M à pH 8,0. On a ensuite laissé reposer le mélange 24 h à température ambiante et pH 8.

On a alors centrifugé pour séparer le support minéral de l'excédent de solution de bacitracine et remis le culot en suspension dans un excès d'une solution 1 M d'éthanolamine à pH 8 (50 ml) afin de désactiver les groupes époxy éventuellement encore présents.

On a procédé à la centrifugation de la suspension (10 min, 6000 g) et on a ensuite lavé le culot à quatre reprises (avec, à chaque fois, séparation intermédiaire par centrifugation), successivement, deux fois avec de l'eau, une fois dans du NaCl 1 M et finalement dans du tampon Tris (10 mM) et 0,2 mM en $CaCl_2$, pH 8.

On a ensuite utilisé le support «silice-bacitracine» pour l'extraction et purification par adsorption biospécifique de l'enzyme subtilisine BPN' qui forme un complexe spécifique avec la bacitracine.

Pour ce faire, on a introduit le support ci-dessus, dans un milieu de fermentation à pH 8 préalablement clarifié, contenant 47 mg/ml de protéines et présentant une activité enzymatique de 2000 U/ml, à raison de 100 mg de substrat solide par ml de solution. Dans ce qui précède, on définit l'unité de subtilisine BPN' comme la quantité d'enzyme capable d'hydrolyser une μmole d'ester éthylique de la N-acétyl-L-tyrosine par minute à température ambiante et à pH 8. Après 30 min d'incubation, on a centrifugé (6000 g, 10 min) et par analyse du liquide surnageant, on a constaté que son activité enzymatique correspondait aux 3,7% de l'activité initiale et qu'il contenait, dissoutes, 74% des protéines initialement présentes.

On a mis le culot en suspension dans une solution 1 M de NaCl et contenant, en volume, 25% d'isopropanol en utilisant 30 ml de cette solution par g de support. Après 1 h, on a centrifugé à nouveau et obtenu une fraction liquide E1. On a repris le culot et on l'a réextrait à nouveau identiquement, ce qui a fourni une seconde fraction E2. La mise en commun des fractions E1 et E2 et leur analyse ont révélé la présence de 96,4% de l'activité enzymatique originale combinée avec 23% en poids de la quantité de protéines présentes dans la solution de départ. Le facteur de purification de la subtilisine était donc de 4,2.

*Exemple 2:*

On a utilisé la silice silanisée de l'exemple 1 et on l'a couplée avec la lectine concanavaline A (Con A) en travaillant dans un tampon carbonate 0,2 M, pH 9. On a ajouté la solution de Con A dissoute dans le même tampon (21 mg/ml) au taux de 247 mg de Con A par g de silice silanisée (calculé comme produit sec) et on a laissé sous agitation à température ambiante durant une nuit; puis on a bloqué les groupes époxy libres par l'éthanolamine en solution 1 M, pH 9 et laissé une nuit au repos.

On a ensuite séparé le solide par centrifugation et on a lavé le culot (par resuspension dans un milieu aqueux, suivie de centrifugation) à l'aide des solutions suivantes:

Eau 2 fois; NCI 1 M dans du tampon Tris 10 mM, pH 9; NaCl 1 M dans du tampon acétate 10 mM à pH 5; finalement, NaCl 0,05 M dans du Tris 0,05 M à pH 8, cette solution contenant encore, par litre, 2 mmoles de chacun des ions suivants: $Ca^{++}$, $Mg^{++}$, $Mn^{++}$.

Le substrat silice-Con A a ensuite été utilisé pour l'extraction d'immunoglobuline IgG conjuguée à la peroxydase de raifort. Dans cette intention, on a, au préalable, vérifié l'absence d'affinité du système silice-Con A pour l'IgG seule. Pour ce faire, on a traité 10 mg d'IgG humaine (MILES) dissoute dans un tampon Tris 50 mM, NaCl 50 mM à pH 8 par 100 mg de silice-Con A. Après 30 min de contact, on a centrifugé comme précédemment décrit (6000 g; 10 min); on a redispersé le culot dans le même milieu et effectué une nouvelle centrifugation. Les surnageants des deux opérations ont été combinés et, par analyse, on a constaté la présence de 98% du contenu initial en protéines. On a ensuite marqué à la peroxydase de l'IgG humaine en solution selon S. Avrameas, Immunochemistry (1969) 6, 43, la fraction d'IgG ainsi marquée étant ensuite extraite grâce au support silice-Con A.

On a traité la solution contenant simultanément de l'IgG libre et de l'IgG marquée à la peroxydase par le support silice-Con A à raison de 100 mg de celui-ci par 6 mg de protéines en solution. Le milieu consistait en un tampon NaCl 50 mM, Tris 50 mM, pH 8, Ca$^{++}$, Mg$^{++}$ 2 mM. Après 30 min à température ambiante, les particules de solide ont été séparées par centrifugation. Par analyse, on a constaté que le liquide surnageant ne contenait plus que 8,2% de l'activité peroxydase de départ mais environ 92% de la portion non conjuguée d'IgG.

Le complexe peroxydase-IgG fixé sur le support silice-Con A a été dissocié comme suit: on a mis ce support ainsi chargé en suspension dans une solution 0,1 M d'α-méthylglucoside dans la solution tampon NaCl 50 mM; Tris 50 mM; pH 8; Ca$^{++}$, Mg$^{+-}$, Mn$^{++}$ 2 mM. Après 30 min d'incubation, on a centrifugé (6000 g, 10 min); le liquide surnageant contenait 86,2% de l'activité peroxydase de départ.

*Exemple 3:*

On a ajouté goutte à goutte à 4°C 6 mmoles de 4-phénylbutylamine (ligand) à 5 mmoles de glycidoxypropyl-triméthoxysilane. On a agité encore 1 h à 4°C puis on a laissé remonter la température et on a arrêté l'agitation après un total de 5 h.

On a ensuite ajouté 10 ml d'une solution aqueuse de CH$_3$COONa (10 mM, pH 4) à cette solution et on a laissé la préhydrolyse des groupes alcoxy s'effectuer pendant environ 30 min à température ambiante.

On a préparé entre-temps une dispersion aqueuse de silice pyrogénique (AEROSIL-130) comme décrit à l'exemple 1 et on a ajouté, à cette dispersion, la solution aqueuse de silane obtenue comme décrit ci-dessus à raison de 50 μmoles de silane par g de silice. On a ajusté le pH à 8,5 et laissé la réaction de greffage s'effectuer 72 h à température ambiante.

On a isolé le support de silice silanisé et couplé au ligand par les moyens décrits à l'exemple 1 et on l'a remis en suspension dans un tampon CaCl$_2$ 50 mM, Tris 50 mM (pH 8) à raison de 40 mg de solide par ml de phase aqueuse. On a alors ajouté cette suspension à un extrait pancréatique brut dans le même tampon que ci-dessus (pH 8), cet extrait contenant, outre des contaminants d'origine pancréatique, de la trypsine et de la chymotrypsine. La proportion de support ajouté à la solution d'extrait était de 10 g par g de matière sèche d'extrait. Après un contact de 30 min, on a séparé le solide comme décrit dans les exemples précédents et on a mis de côté le liquide surnageant (S1). On a répété cette opération après mise en suspension du culot dans le même tampon à raison de 25 ml/g de silice, ce qui a fourni une seconde portion de liquide (S2). Finalement, on a répété une troisième fois cette remise en suspension du solide, mais dans une solution 1 M de bromure de tétraéthylammonium (25 mg/g de solide), on a centrifugé et obtenu une troisième portion de liquide (E1).

On a procédé alors aux analyses enzymatiques des diverses fractions récoltées. Ces analyses sont basées sur l'utilisation de N-benzoylarginine-p-nitroanilide (BAPNA) comme substrat pour la trypsine et de glutarylphénylalanine-p-nitroanilide (GLUPHEPA) comme substrat pour la chymotrypsine. Les techniques sont les suivantes.

Trypsine: on ajoute 10 μl de la solution à analyser à un excès d'une solution 10$^{-3}$ M de BAPNA dans un tampon CaCl$_2$ 10 mM et Tris HCl 50 mM, pH 8 et on mesure spectrophotométriquement la quantité de p-nitroaniline formée à 410 nm. On définit une unité BAPNA comme la quantité de trypsine capable d'hydrolyser 1 μmole de BAPNA par minute à la température ambiante dans les conditions susmentionnées. A titre d'exemple, un échantillon de trypsine très pure (origine SIGMA, type IX) d'une activité BAEE donnée de 15 600 unités/mg titre 2,35 unités BAPNA/mg.

Chymotrypsine: on ajoute 10-20 μl de la solution à analyser à un excès d'une solution 10$^{-3}$ M de GLUPHEPA dans un tampon CaCl$_2$ 10 mM, Tris-HCl 50 mM, pH 7,6 et on mesure la vitesse de libération hydrolytique de la p-nitroaniline à 410 nm. On définit une unité GLUPHEPA comme la quantité de trypsine capable de libérer 1 μmole de p-nitroaniline/min à température ambiante dans les conditions données. Par exemple, une préparation hautement purifiée de chymotrypsine (SIGMA type II) donnée comme ayant une activité de 65 unités BTEE/mg titre 68×10$^{-3}$ unités GLUPHEPA/mg.

On a appliqué ces méthodes d'analyse aux diverses fractions du présent exemple, ce qui a fourni les résultats suivants:

| Echantillon | Activité BAPNA | | Activité GLUPHEPA | |
|---|---|---|---|---|
| | Unités | % | Unités | % |
| Extrait de départ | 5.450 | 100 | 816 | 100 |
| S1 | 3.690 | 77 | 62 | 8,5 |
| S2 | 490 | | 7 | |
| E1 | 420 | 7,7 | 626 | 77 |

Ces résultats montrent bien que le présent système silice-4-phényl-butylamine fixe sélectivement la chymotrypsine en présence de trypsine. La chymotrypsine fixée est par ailleurs relarguée par la solution de tétraéthylammonium et contient moins de 10% de la trypsine de départ. Le rendement de purification de la chymotrypsine est de 77%.

*Exemple 4:*

On a utilisé dans cet exemple de l'oxyde d'aluminium (type C, DEGUSSA) comme support minéral. On a dispersé cette alumine (5 g) dans 50 ml d'eau à l'aide d'un homogénéiseur Polytron.

La taille moyenne des particules après dispersion telle que mesurée à l'aide du Coulter Nanosizer est de 220 nm. Par ailleurs, on a préparé une solution aqueuse de glycidoxypropyl-triméthoxysilane (1 mmole/ml) telle que décrite à l'exemple 1.

On a ensuite ajouté avec agitation un aliquot de la solution aqueuse de silane à la suspension d'alumine (1 mmole de silane par g d'alumine) et on a ajusté le pH à 7,5 par addition de quelques gouttes de solution aqueuse de NaOH 1 N. Après une nuit de repos, on a centrifugé la suspension (6000 g, 10 min), repris le culot dans de l'eau pure et centrifugé une seconde fois dans les mêmes conditions. On a couplé ensuite l'alumine silanisée à de l'acide m-aminophényl-boronique (0,5 M) dans du tampon bicarbonate 0,2 M à pH 8,0 et laissé le mélange reposer 72 h à pH 8,0 et température ambiante. Les particules du système alumine-m-aminophénylboronique ont été ensuite lavées à quatre reprises par centrifugation et resuspension dans de l'eau. Après la dernière centrifugation, le support a été mis en suspension dans un tampon Tris 10 mM, $CaCl_2$ 0,2 mM, pH 8,0.

On a ensuite utilisé ce support pour l'extraction et la purification de la subtilisine BPN'. On a utilisé le même milieu de fermentation clarifié que dans l'exemple 1 contenant 47 mg/ml de protéines et présentant une activité enzymatique de 2000 U/ml, et on a ajouté 100 mg de support par ml de solution. Après 20 min à température ambiante, on a centrifugé (6000 g, 10 min). L'analyse du liquide surnageant a montré que l'activité enzymatique de ce liquide correspondait aux 32% de l'activité enzymatique initiale. On a mis le culot en suspension dans une solution 0,5 M de pentaérythritol et, après une heure, on a centrifugé à nouveau et obtenu une fraction liquide E. Cette dernière contenait 59% de l'activité enzymatique initialement présente et 24% de la quantité de protéines présentes dans la solution de départ. Cette opération a donc permis de purifier la subtilisine de départ avec un facteur de purification de 2,25.

*Exemple 5:*

On a ajouté goutte à goutte 10 mmoles de γ-aminopropyl-triméthoxysilane à 5 ml d'une solution d'acétate de Na 0,02 M, pH 4,0 en veillant à maintenir le pH entre 4 et 5 par addition progressive d'acide chlorhydrique 4 N. On a ensuite maintenu la solution 30 min sous agitation à température ambiante. Puis on a complété son volume à 10 ml avec de l'eau distillée.

On a dispersé de la silice pyrogénique (Aerosil 300, 5 g) dans 50 ml d'eau à l'aide d'un homogénéiseur POLYTRON. On a ajouté alors à la suspension de silice dispersée la solution aqueuse de silane à raison de 1 mmole de silane par g de silice et on a ajusté le pH de la solution à 7,0 par addition de $K_2HPO_4$ 1 M. On a laissé la suspension sous agitation durant une nuit à température ambiante.

Les particules sont alors centrifugées (10 min, 6000 g) et le culot est suspendu dans de l'eau distillée. Cette opération est répétée quatre fois, les particules étant suspendues successivement dans NaCl 1 M, dans de l'eau distillée, dans un mélange eau/alcool (50:50) et, enfin, dans de l'éthanol pur. La suspension finale dans l'éthanol contient environ 50 mg de silice par ml. On a préparé ensuite une solution 0,5 M de N-carbobenzoxy-L-phénylalanine (Z-L-Phe) dans de l'éthanol et une solution 0,5 M de N-éthoxycarbonyl-2-éthoxy-1,2-dihydroquinoline (EEDQ). A 100 ml de la suspension de silice silanisée, on a ajouté 10 ml de la solution de Z-L-Phe puis 10 ml de la solution de EEDQ; on a laissé sous agitation durant 24 h à température ambiante.

On a ensuite lavé les particules par des centrifugations répétées suivies de remise en suspension dans de l'éthanol d'abord (3 fois) puis dans le mélange éthanol/eau (1 fois) et enfin dans de l'eau distillée.

On a utilisé ces particules pour la purification d'une solution contenant de la subtilisine BPN', comme décrit dans l'exemple 1. On a utilisé 100 mg de silice-Z-L-Phe par 2000 U d'enzyme. Dans ces conditions, le surnageant après centrifugation (S1) contenait moins de 1% de l'activité enzymatique de départ. Les particules ont ensuite été mises en suspension dans une solution de NaCl 1 M contenant 25% d'isopropanol et, une heure après, on a centrifugé cette suspension. Le surnageant E1 contenait cette fois 87% de l'activité enzymatique de départ.

## Revendications

1. Procédé pour séparer par adsorption sur un support minéral en phase aqueuse une substance bioactive susceptible de se fixer spécifiquement et réversiblement sur un ligand donné suivant lequel on utilise, comme substrat adsorbant, un système «minéral-ligand» constitué d'un matériau en particules choisi parmi $SiO_2$, $Al_2O_3$, $TiO_2$ et $ZrO_2$ sur lequel lesdits ligands sont fixés par l'intermédiaire de réactifs siloxanes, procédé suivant lequel

a) on mélange ledit support avec ladite phase aqueuse de manière que ladite substance se lie audit ligand;

b) on sépare ce support ainsi chargé d'avec ladite phase aqueuse par centrifugation ou filtration;

c) on disperse ce support ainsi séparé dans une seconde phase aqueuse et on désorbe ladite substance de son support;

d) on sépare le support ainsi déchargé d'avec ladite seconde phase aqueuse contenant en solution ladite substance par centrifugation ou filtration puis on isole celle-ci de la solution, caractérisé par le fait que les particules minérales utilisées comme substrat adsorbant sont submicroniques et non poreuses.

2. Procédé suivant la revendication 1, caractérisé par le fait qu'on utilise un matériau en poudre fine dont les particules ont une taille inférieure à 1 μm et dont la surface spécifique est de 50 à 600 m²/g.

3. Procédé suivant la revendication 2, caractérisé par le fait que ledit matériau est de la silice précipitée ou pyrogénique.

4. Procédé pour la préparation du support «minéral-ligand» utilisé dans le procédé suivant la revendication 1, caractérisé par le fait que les particules minérales utilisées sont submicroniques, non poreuses et silanisées par un trialcoxy-alcoyl silane dont le groupe alcoyle comporte une fonction réactive couplée à ce ligand et qu'on utilise, pour la silanisation du matériau de départ, soit un silane comportant ledit ligand préalablement fixé, soit un silane non encore couplé à ce ligand, la fixation de ce dernier intervenant postérieurement.

5. Procédé suivant la revendication 4, caractérisé par le fait qu'on effectue ladite silanisation de la silice en dispersant celle-ci dans un milieu liquide jusqu'à obtention d'agglomérats particulaires de 100 à 1000 nm puis qu'on ajoute le trialcoxy-alcoyl silane sous agitation à température ordinaire ou entre 20 et 80° C.

6. Procédé suivant la revendication 4, caractérisé par le fait que la fonction réactive dudit trialcoxy-alcoyl silane est choisie parmi les fonctions −NCO, azo, glycidoxy, −CHO, oxiranne et amino.

7. Procédé suivant la revendication 6, caractérisé par le fait que ledit trialcoxy-alcoyl silane est le triméthoxyaminopropyl silane ou le triméthoxyglycidoxypropyl silane.

8. Procédé suivant la revendication 4, dans lequel on couple le ligand au silane avant silanisation du matériau particulaire minéral, caractérisé par le fait qu'on effectue ledit couplage en faisant réagir ce silane avec ledit ligand en présence ou en l'absence d'un solvant organique.

9. Procédé suivant la revendication 4, dans lequel on procède au couplage du ligand et du matériau minéral après silanisation de celui-ci, caractérisé par le fait qu'on fait réagir le matériau silanisé avec le ligand en milieu aqueux ou organique anhydre.

10. Procédé suivant la revendication 5, caractérisé par le fait qu'on ajoute le trialcoxy-alcoyl silane sous forme d'une dispersion de celui-ci dans l'eau, ses groupes alcoxy étant alors soumis à une préhydrolyse, ledit milieu liquide étant un milieu aqueux.

11. Procédé suivant la revendication 10, caractérisé par le fait qu'on réalise ladite dispersion en agitant le silane dans une phase aqueuse à température ambiante pendant 15 min à 20 h, la durée du temps de traitement auquel le trialcoxy silane est soumis ayant progressivement un effet sur les propriétés du substrat silanisé en ce qui concerne la fixation ultérieure dudit ligand.

12. Support «minéral-ligand» utilisé pour la mise en œuvre du procédé suivant la revendication 1, caractérisé par le fait qu'il est constitué d'un matériau particulaire submicronique non poreux choisi parmi SiO₂, Al₂O₃, TiO₂ et ZrO₂, dont la surface spécifique est comprise entre 50 et 600 m²/g, notamment de la silice pyrogénique ou précipitée, et mis en dispersion dans l'eau jusqu'à obtention d'agrégats particulaires dont la dimension moyenne est de 100 à 1000 nm, ces agrégats étant porteurs, à leur surface, de ligands spécifiques d'une substance à purifier par adsorption biospécifique, ces ligands étant fixés par l'intermédiaire d'un silane de liaison.

Patentansprüche

1. Verfahren zum Trennen durch Adsorption auf einem mineralischen Träger in wässeriger Phase einer bioaktiven Substanz, die spezifisch und reversibel an einem gegebenen Liganden befestigt werden kann, gemäss dem man als adsorbierendes Substrat ein System «Mineral-Ligand» verwendet, das aus einem teilchenförmigen Material besteht, das aus SiO₂, Al₂O₃, TiO₂ und ZrO₂ ausgewählt wird, auf dem die Liganden mit Hilfe reaktiver Siloxane verbunden sind, wobei gemäss des Verfahrens man

a) den Träger mit der wässerigen Phase derart mischt, dass die Substanz sich mit dem Liganden verbindet,

b) diesen so mit der wässerigen Phase beladenen Träger durch Zentrifugation oder Filtration trennt,

c) den so hergestellten Träger in der zweiten wässerigen Phase dispergiert und die Substanz vom Träger desorbiert,

d) den so befreiten Träger von der zweiten wässerigen Phase, die in Lösung die Substanz enthält, durch Zentrifugation oder Filtration trennt, bis man diese von der Lösung isoliert, dadurch gekennzeichnet, dass die als adsorbierendes Substrat verwendeten mineralischen Teilchen submikron und nicht porös sind.

2. Verfahren nach Anspruch 1, dadurch gekennzeichnet, dass man ein feinpudriges Material verwendet, dessen Teilchen eine Grösse unter 1 µm haben und dessen spezifische Oberfläche von 50 bis 600 m²/g beträgt.

3. Verfahren nach Anspruch 2, dadurch gekennzeichnet, dass das Material gefällte oder pyrogene Kieselsäure ist.

4. Verfahren zur Herstellung des Trägers «Mineral-Ligand», der beim Verfahren gemäss Anspruch 1 verwendet wird, dadurch gekennzeichnet, dass die verwendeten mineralischen Teilchen submikron, nicht porös und durch ein Trialkoxi-Alkylsilan silanisiert sind, deren Alkylgruppe eine reaktive Funktion trägt, die mit dem Liganden gekoppelt ist, und dass man für die Silanisierung des Ausgangsmaterials entweder ein Silan mit einem vorher befestigten Liganden oder ein mit diesem Liganden noch nicht gekoppeltes Silan verwendet, wobei deren Befestigung später stattfindet.

5. Verfahren nach Anspruch 4, dadurch gekennzeichnet, dass man diese Silanisierung der Kieselerde durchführt, indem man diese in einem flüssigen Medium dispergiert, bis man die Teilchenagglomerate von 100 bis 1000 nm erhält, worauf man dann das Trialkoxi-Alkylsilan unter Rühren bei normaler Temperatur oder zwischen 20 und 80° C zuführt.

6. Verfahren nach Anspruch 4, dadurch gekennzeichnet, dass die reaktive Funktion des Trialkoxi-Alkylsilans ausgewählt wird aus den Funktionen −NCO, Azo, Glycidoxi, −CHO, Oxiran und Amino.

7. Verfahren nach Anspruch 6, dadurch gekennzeichnet, dass das Trialkoxi-Alkylsilan das Trimethoxiaminopropylsilan oder das Trimethoxi-Glycidoxipropylsilan ist.

8. Verfahren nach Anspruch 4, bei dem man den Liganden mit dem Silan vor der Silanisierung des besonderen Mineralmaterials koppelt, dadurch gekennzeichnet, dass man diese Koppelung durchführt, indem man das Silan mit dem Liganden in Gegenwart oder in Abwesenheit eines organischen Lösungsmittels reagieren lässt.

9. Verfahren nach Anspruch 4, bei dem man das Verfahren zur Koppelung des Liganden und des mineralischen Materials nach dessen Silanisierung durchführt, dadurch gekennzeichnet, dass man das silanisierte Material mit dem Liganden im wässerigen Milieu oder organischen wasserfreien Milieu reagieren lässt.

10. Verfahren nach Anspruch 5, dadurch gekennzeichnet, dass man das Trialkoxi-Alkylsilan in Form einer Dispersion in Wasser zusetzt, wobei die Alkoxigruppen somit einer Prehydrolyse unterworfen sind und das flüssige Milieu ein wässeriges Milieu ist.

11. Verfahren nach Anspruch 10, dadurch gekennzeichnet, dass man die Dispersion herstellt, indem man das Silan in einer wässerigen Phase bei Raumtemperatur 15 min bis 20 Stunden lang rührt, wobei die Behandlungsdauer des Trialkoxisilans progressiv einen Einfluss auf die Eigenschaften des silanisierten Substrates hat, soweit dies die abschliessende Befestigung des Liganden betrifft.

12. «Mineral-Ligand»-Träger, der für die Durchführung des Verfahrens gemäss Anspruch 1 verwendet wird, dadurch gekennzeichnet, dass er aus einem nicht porösen, submikronen Teilchenmaterial besteht, das aus $SiO_2$, $Al_2O_3$, $TiO_2$ und $ZrO_2$ ausgewählt wird, wobei die spezifische Oberfläche zwischen 50 und 600 m²/g liegt, insbesondere gefällte oder pyrogene Kieselsäure, wobei die Dispersion in Wasser durchgeführt wird, bis teilchenförmige Aggregate erhalten werden, deren mittlere Abmessungen zwischen 100 und 1000 nm liegen, wobei die Aggregate an ihren Oberflächen Träger spezifischer Liganden einer durch biospezifische Adsorption zu reinigenden Substanz sind und wobei die Liganden mit Hilfe eines Verbindungssilans fixiert sind.

## Claims

1. A method of separating a bioactive substance by adsorption on a mineral carrier in the aqueous phase, the substance being capable of being specifically and reversibly fixed to a given ligand, in which the adsorbent substrate used is a «mineral-ligand» system comprising a particulate material chosen from among $SiO_2$, $Al_2O_3$, $TiO_2$ and $ZrO_2$ to which the ligands are fixed via siloxane reagents, and according to which:

a) the carrier is mixed with the aqueous phase so that the substance becomes bonded to the ligand;

b) the resulting charged carrier is separated from the aqueous phase by centrifuging or filtration;

c) after being separated, the carrier is dispersed in a second aqueous phase and the substance is desorbed from the carrier, and

d) after being thus discharged, the carrier is separated by centrifuging or filtration from the second aqueous phase containing the substance in solution, after which the substance is isolated from the solution, characterised in that the mineral particles used as the adsorbent substrate are submicronic and non-porous.

2. A method according to claim 1, characterised in that use is made of a finely powdered material having a particle size less than 1 μm and a specific surface of 50 to 600 m²/g.

3. A method according to claim 2, characterised in that the material is precipitated or pyrogenic silica.

4. A method of preparing the «mineral-ligand» carrier used in the method according to claim 1, characterised in that the mineral particles used are non-porous, of submicronic size and are silanized by a trialkoxy-alkyl silane where the alkyl group contains a reactive group coupled to the ligand, and in that there is used for silanizing the starting material either a silane comprising said ligand, the latter having been fixed thereto, or a silane not yet coupled to the ligand which is fixed subsequently.

5. A method according to claim 4, characterised in that the silica is silanized by dispersing it in a liquid medium long enough to obtain particulate agglomerates measuring 100 to 1,000 nm, after which the trialkoxy-alkyl silane is added with agitation at ambient temperature or between 20 and 80° C.

6. A method according to claim 4, characterised in that the reactive group of the trialkoxy-alkyl silane is chosen from among the following groups: −NCO, azo, glycidoxy, −CHO, oxirane and amino.

7. A method according to claim 6, characterised in that the trialkoxy-alkyl silane is trimethoxyaminopropyl silane or trimethoxy-glycidoxypropyl silane.

8. A method according to claim 4 in which the ligand is coupled to the silane before the particulate mineral material has been silanized, characterised in that coupling is brought about by reacting the silane with the ligand in the presence or absence of an organic solvent.

9. A method according to claim 4, in which the ligand is coupled to the mineral material after the latter has been silanized, characterized in that the silanized material is reacted with the ligand in an aqueous or anhydrous organic medium.

10. A method according to claim 5, characterised in that the trialkoxy-alkyl silane is added in the form of a dispersion thereof in water, the alkoxy groups being thereupon prehydrolysed and the liquid medium being an aqueous medium.

11. A method according to claim 10, characterised in that the dispersion is produced by agitating the silane in an aqueous phase at ambient temperature for 15 minutes to 20 hours, the length of the treatment time of the trialkoxy silane having a progressive effect on the properties of the silanized substrate with regards to subsequent fixation of the ligand.

12. A «mineral-ligand» carrier used for working the method according to claim 1, characterised in that it comprises a non-porous submicronic particulate material chosen from among $SiO_2$, $Al_2O_3$, $TiO_2$ and $ZrO_2$ having a specific surface between 50 and 600 m²/g, inter alia pyrogenic or precipitated silica, and dispersed in water until particle aggregates are obtained having an average size of 100 to 1,000 nm, the surface of the aggregates carrying ligands specific to a substance to be purified by biospecific adsorption, the ligands being fixed via a silane linker.